Europäisches Patentamt

European Patent Office

Office européen des brevets

(11) Veröffentlichungsnummer: **0 132 510**

**A2**

# (12) EUROPÄISCHE PATENTANMELDUNG

(21) Anmeldenummer: 84104572.7

(22) Anmeldetag: 24.04.84

(51) Int. Cl.⁴: **G 01 N 21/07**
**B 04 B 5/00, G 01 N 35/00**

Ein Antrag nach Regel 88 EPU zur Aufnahme der fehlenden Seite 5 der Ansprüche in die ursprünglich eingereichten Ansprüche von 24.04.1984 ist am 22.05.1984 eingegangen.

(30) Priorität: 25.04.83 DE 3314961

(43) Veröffentlichungstag der Anmeldung:
13.02.85 Patentblatt 85/7

(84) Benannte Vertragsstaaten:
AT BE CH DE FR GB IT LI LU NL SE

(71) Anmelder: Boehringer Mannheim GmbH
Sandhoferstrasse 116
D-6800 Mannheim 31(DE)

(72) Erfinder: Edelmann, Hermann
Diemendorfer Strasse 21
D-8132 Tutzing(DE)

(72) Erfinder: Pasch, Manfred
Anton-Bartl-Strasse 7
D-8132 Tutzing(DE)

(72) Erfinder: Mann, Karlheinz
Herbststrasse 15
D-8120 Weilheim(DE)

(72) Erfinder: Sattler, Stefan
Maisinger Weg 20
D-8135 Söcking(DE)

(72) Erfinder: Haar, Hans-Peter, Dr. rer. nat.
Starenweg 2
D-8120 Weilheim(DE)

(54) Analysegerät zur photometrischen Bestimmung eines Parameters einer Flüssigkeit.

(57) Das Zentrifugal-Analysegerät zur photometrischen Bestimmung eines Parameters einer Flüssigkeit weist einen im wesentlichen kreisscheibenförmigen, um eine zentrische Drehachse (5) von einem Motor (3) rotierend antreibbaren Rotor (7) auf. An dem Rotor (7) sind eine Vielzahl als radiale Führungskammern (9) ausgebildete Halterungen für Einsatzelemente (9) vorgesehen. Jedes der Einsatzelemente (9) enthält zumindest eine optische Meßkammer für die zu analysierende Flüssigkeit, deren Drehweg den optischen Strahlengang eines photometrischen Meßgeräts kreuzt. Die Einsatzelemente (11) werden von einer Transporteinrichtung (19) radial zur Drehachse (5) in die Führungskammern (11) eingeschoben und von federbelasteten oder fliehgewichtbetätigten Hebeln (63) in Eingriff mit Positionierorganen (57) gebracht, die in Umfangsrichtung des Rotors (7) seitlich des Einschiebewegs der Einsatzelemente (11) angeordnet sind.

./...

FIG. 3

BOEHRINGER MANNHEIM GMBH                    2543

Analysegerät zur photometrischen Bestimmung eines
Parameters einer Flüssigkeit

Die Erfindung betrifft ein  Analysegerät zur photometrischen Bestimmung eines Parameters einer Flüssigkeit, insbesondere ein Zentrifugal-Analysegerät mit einem um eine zentrische Drehachse drehbar an einem Geräterahmen gelagerten und von einem Motor rotierend antreibbaren Rotor, mit mehreren, an dem Rotor vorgesehenen Halterungen für betriebsmäßig abnehmbare, langgestreckte und mit ihrer Längsrichtung im wesentlichen radial zur Drehachse des Rotors anzuordnende Einsatzelemente, von denen jedes zumindest eine optische Meßkammer für die Flüssigkeit enthält, mit zueinander komplementären Positionierorganen an den Halterungen und den Einsteckelementen, deren gegeneinander gerichtete Anlageflächen die Einsatzelemente sowohl radial als auch in Umfangsrichtung des Rotors positionieren, wobei zumindest ein Teil der die Einsatzelemente in Umfangsrichtung positionierenden Anlageflächen der Positionierorgane der Halterungen rotorfest ausgebildet sind und mit einem photometrischen Meßgerät, dessen optischer Strahlengang den Drehweg der Meßkammern der an dem Rotor gehaltenen Einsatzelemente schneidet.

Ein Zentrifugal-Analysegerät dieser Art ist aus der DE-A-30 44 385 bekannt. Es dient der klinisch-chemischen Analyse,

83 Sb

insbesondere von Blut- und Serumbestandteilen, als Basis einer medizinischen Diagnose. Die zu messende Flüssigkeitsprobe wird in das Einsatzelement eingebracht und durch Zentrifugieren mit in dem Einsatzelement enthaltenen Reagenzien gemischt. Das Einsatzelement kann neben der optischen Meßkammer mehrere Mischkammern enthalten, die untereinander so verbunden sind, daß die Flüssigkeit bei geeigneter Steuerung der Rotorbewegung zwischen den einzelnen Kammern überströmen kann. Durch Steuern der Rotorbewegung läßt sich so das Mischen mit Reagenzien, die Inkubation und der Reaktionsablauf steuern. Bei den Reagenzien kann es sich um beispielsweise herstellerseitig in die Einsatzelemente eingebrachte Trockenreagenzien handeln. Es können aber auch Flüssigreagenzien benutzt werden. Mit Hilfe eines derartigen Analysegeräts vom Rotortyp können mehrere Flüssigkeitsproben gleichzeitig untersucht werden, was den Zeitbedarf der Analyse erheblich senkt. Bei dem bekannten Zentrifugal-Analysegerät ist der Rotor als flache Kreisscheibe ausgebildet, auf welchen die Einsatzelemente in nicht näher dargestellter Weise mit Winkelabstand um die Drehachse herum befestigt werden.

Ein für einen Zentrifugal-Analysator der vorstehenden Art besonders geeignetes Photometer ist aus der DE-A- 29 30 431 bekannt. Es handelt sich um ein polychromatisches Photometer, welches die Messung der Parameter einer Vielzahl auf einem Rotor angebrachter Proben in besonders kurzer Zeit und bei mehreren, wählbaren Lichtwellenlängen erlaubt.

Aus der US-PS 3 713 775 ist ein Zentrifugal-Analysegerät bekannt, bei welchem mehrere, mit der zu messenden Probeflüssigkeit beschickte Einsatzelemente mittels eines flexiblen Tragkörpers zu einer Einheit zusammengefaßt werden. Der Tragkörper wird um die Drehachse des Rotors herumgebogen an dem Rotor befestigt, wobei die Einsatzelemente radial zur Rotordrehachse verlaufen. Der Tragkörper fixiert und positioniert die Einsatzelemente relativ zum Strahlengang des Photometers. Das mit den Einsatzelementen bestückte Tragelement wird radial von oben her auf den Rotor aufgesetzt.

Ein weiteres Zentrifugal-Analysegerät ist aus dem US-Patent 4 135 883 bekannt. Bei diesem Analysegerät weist der Rotor von oben her axial zu seiner Drehachse zugängliche Taschen auf, in die die Einsatzelemente verriegelbar eingesteckt werden.

Bei den bekannten Analysegeräten können nur relativ wenig Einsatzelemente an dem Rotor gleichzeitig befestigt werden. Die Durchleuchtungsfläche der Meßkammer ist vergleichsweise groß, um auch bei geringen Anforderungen an die Postioniergenauigkeit im wesentlichen gleichbleibende Meßbedingungen des Photometers zu schaffen. Weiterhin werden die Einsatzelemente bei den bekannten Analysegeräten radial von oben her auf den Rotor aufgesetzt. Die Einsatzelemente sind während des Betriebs frei der Ventilatorwirkung des Rotors ausgesetzt und werden durch die erzeugte Luftströmung unkontrollierbar gekühlt. Soweit der Rotor in einem ortsfesten Gehäuse rotiert und mittels einer Heizeinrichtung auf einem vorgegebenem Temperaturniveau gehalten werden soll, lassen sich nur relativ weite Temperaturgrenzen einhalten, da zum Einstecken der Einsatzelemente eine große Gehäuseöffnung erforderlich ist.

Aufgabe der Erfindung ist es, ein Analysegerät zur photometrischen Bestimmung eines Parameters einer Flüssigkeit, insbesondere ein Zentrifugal-Analysegerät anzugeben, bei welchem der zum Zuführen der Einsatzelemente erforderliche Öffnungsquerschnitt des Rotors möglichst klein ist, um das Konstanthalten der Rotortemperatur zu erleichtern. Darüber hinaus sollen die Halterungen der Einsatzelemente so gestaltet sein, daß auch automatisches Zuführen der Einsatzelemente mit geringem konstruktivem Aufwand möglich ist. Der Rotor soll ferner eine vergleichsweise hohe Zahl von Einsatzelementen gleichzeitig aufnehmen und exakt positionieren können.

Diese Aufgabe wird erfindungsgemäß dadurch gelöst, daß die Halterungen als radial zur Drehachse des Rotors nach außen offene Führungskammern ausgebildet sind, in die die Einsatzelemente im wesentlichen radial zur Drehachse einschiebbar sind, daß die Positionierorgane der Halterungen jeweils in Umfangsrichtung des Rotors seitlich des Einschiebewegs des Einsatzelements angeordnet sind, daß die in die Führungskammern eingeschobenen Einsatzelemente und/oder ein an dem Rotor beweglich geführtes Positionierelement jeder Halterung in Umfangsrichtung des Rotors relativ zu dem rotorfesten Teil des Positionierorgans der Halterung verschiebbar sind, und daß den Halterungen Stellorgane zugeordnet sind, die die in die Führungskammern eingeschobenen Einsatzelemente und/oder die beweglich geführten Positionierelemente in eine Eingriffsposition der Positionierorgane, in der die Einsatzelemente an dem rotorfesten Teil der Positionierorgane der Halterungen anliegen, verschieben und in der Eingriffsposition halten.

Die Einsatzelemente werden von radial außen her durch eine Öffnung mit relativ kleinem Querschnitt in den Rotor eingeschoben, wobei bevorzugt der Rotor mittels eines im wesentlichen radial beweglichen Riegels in einer Einsatzelement-Wechselposition verrastet wird. Das Einschieben kann durch relativ einfache, automatische Zuführeinrichtung geschehen. Die Positionierorgane der Halterung verrasten nicht nur das Einsatzelement in der Führungskammer, sondern richten auch die Meßkammer exakt zum optischen Strahlengang des photometrischen Meßgerätes aus. Die exakte Ausrichtung ist erforderlich, da der Durchleuchtungsquerschnitt der Meßkammer aufgrund ihres geringen Volumens sehr klein ist. Das erfindungsgemäße Analysegerät erfüllt relativ hohe Toleranzanforderungen. Bei einem Rotordurchmesser von 320 mm und einer Drehzahl von 3000 Umdrehungen pro Minute können radiale und tangentiale Toleranzen der Meßkammer relativ zum optischen Strahlengang des photometrischen Meßgeräts von z.B. 50 µm eingehalten werden.

Bei dem Positionierorgan der Halterung kann es sich um eine in der Wand der Führungskammer vorgesehene Mulde handeln, in die eine an dem Einsatzelement angeformte Nase oder Rippe aufliegend eingreift. Da die Herstellung der Positioniermulde der Halterung mit Schwierigkeiten verbunden sein kann, ist in einer bevorzugten Ausführungsform vorgesehen, daß das Positionierorgan der Halterung als parallel zur Drehachse vom Rotor abstehender Stift und das Positionierorgan des Einsatzelements als Rastmulde ausgebildet ist.

Zweckmäßigerweise durchsetzt der Stift die Basisscheibe des Rotors vollständig und tritt auf der der Halterung axial abgewandten Seite der Basisscheibe wieder aus. Das austretende Ende des einstückigen Stifts bildet einen Steuerstift für eine Steuerlichtschranke des Photometers. Auf diese Weise werden die Maßtoleranzen zwischen dem Steuerstift und der Meßkammer des positionierten Einsatzelements weiter verringert.

.83 Sb.

Die Führungskammern sind vorzugsweise durch am Rotor und/ oder in geringem Abstand vom Rotor zu dessen Außenflächen parallel angeordnete, am Geräterahmen gehaltene Wände nahezu vollständig geschlossen. Die Konvektionskühlung der Einsatzelemente bei Rotation des Rotors und die Verdunstung des Inhalts der Einsatzelemente ist deshalb vergleichsweise gering. Die Führungskammern können hierbei als Luftleitkanäle ausgenutzt werden, die die temperierte Luft einer temperaturgeregelten Luftquelle in engen Wärmekontakt mit den Einsatzelementen bringen, was die Zeitkonstante der Regelung verbessert.

In einer ersten bevorzugten Ausführungsform ist das Stellorgan als am Rotor schwenkbar gelagerter Hebel ausgebildet und wird von einer Feder gegen das Einsatzelement in Richtung auf das Positionierorgan der Halterung zu vorgespannt. Anstelle der Feder, gegebenenfalls auch zusätzlich, kann ein bei Drehung des Rotors wirksam werdendes Fliehgewicht zur Vorspannungserzeugung herangezogen werden. Der Hebel drückt das Positionierorgan des Einsatzelements gegen das komplementäre Positionierorgan der Halterung, wodurch die Meßkammer des Einsatzelements, die vorzugsweise dem Positionierorgan eng benachbart ist, relativ zum Rotor und dessen das photometrische Meßgerät steuernden Indexierorganen oder dergleichen ausgerichtet und zugleich verrastet wird.

An dem Geräterahmen kann ein Riegel beweglich geführt sein, der bei in einer vorbestimmten Einsatzelement-Wechselposition stillstehenden Rotor in den Schwenkweg des Hebels hineinbewegbar ist. Der Riegel verriegelt den in der Einsatzelement-Wechselposition stehenden Rotor drehfest am Geräterahmen, so daß sich dieser während des Wechselns der Einsatzelemente nicht verdrehen kann. An dem Riegel ist eine entgegen seiner Einführbewegung weisende Anschlagfläche vorgesehen, die mit einer Sperrfläche an dem Hebel zusammenwirkt. Die Sperrfläche ist so gestaltet, daß sie bei in die Führungskammer eingeführtem, jedoch fehlerhaft positioniertem Einsatzelement, das Herausziehen des Riegels und damit die Inbetriebnahme des Geräts verhindert. Das Abschleudern nicht verrasteter Einsatzelemente während des Zentrifugierbetriebs wird so sicher verhindert.

Zweckmäßigerweise bildet der Riegel eine Baueinheit mit einem Auswerfer, der die Positionierorgane des Einsatzelements und der Halterung bei im Schwenkweg des Hebels sich befindendem Riegel außer Eingriff bringt, also entgegen der Vorspannrichtung des Hebels in Umfangsrichtung des Rotors voneinander wegbewegt. Der Riegel kann aufgrund seiner Sperrfunktion erst nach Entnahme des ausgeworfenen Einsatzelements aus dem Rotor zurückgezogen werden.

In einer zweiten bevorzugten Ausführungsform weist das Stellorgan eine zwischen dem Positionierelement und dem Rotor angreifende Feder auf, die das in Umfangsrichtung des Rotors bewegliche Positionierelement auf den rotorfesten Teil der Anlagefläche des Positionierorgans der Halterung zu mit einer Kraft beaufschlagt. Bei diesem rotorfesten Teil der Anlagefläche kann es sich um eine Seitenwand der Führungskammer handeln. In dieser Ausführungsform ist der Öffnungsquerschnitt der Führungskammer besonders klein. Zur Temperierung des Einsatzelements 'an diesem entlangstreichende Luft kann im wesentlichen auf der gesamten Länge des Einsatzelements in engem Kontakt gehalten werden, was das Einhalten einer Solltemperatur erleichtert.

Im Kraftweg zwischen der Feder und dem Positionierelement ist bevorzugt ein an dem Rotor verschiebbar geführtes Druckstück angeordnet. Mittels eines an dem Geräterahmen beweglich geführten Betätigungsteils, das bei stillstehendem Rotor in den Verschiebeweg des Druckstücks hineinbewegbar ist, kann einerseits der Rotor verriegelt und andererseits das Druckstück gegen die Kraft der Feder von dem Positionierelement abgehoben werden. Eine Schubfläche an dem Betätigungsteil bewegt das Positionierelement aus seiner das Einsatzelement positionierenden Eingriffstellung heraus. Die Federkraft wird hierbei von dem Betätigungsteil unmittelbar und nicht über das Positionierelement aufgenommen, was die Lebensdauer des Positionierelements erhöht.

Zweckmäßigerweise ist das Druckstück etwa radial verschiebbar an dem Rotor geführt und weist eine schräg zur Umfangsrichtung radial nach außen weisende Keilschubfläche auf, die unter der Wirkung der Kraft der Feder das Positionierelement auf das Einsatzelement zu verschiebt. Für die Unterbringung der z.B. als Schraubendruckfeder ausgebildeten Feder steht in radialer Richtung auf dem Rotor relativ viel Platz zur Verfügung. Die Feder kann dementsprechend kräftig bemessen sein, so daß das Einsatzelement selbst dann sicher an seine Anlageflächen gedrückt wird, wenn es aufgrund von Bauungenauigkeiten gekrümmt sein sollte. Die Anpreßkraft kann durch geeignete Wahl des Anstellwinkels der Keilschubfläche noch erhöht werden.

Auch bei dieser Ausführungsform ist zur Verminderung der Positioniertoleranzen der Steuerstift einer Steuerlichtschranke nicht an einer Basisscheibe des Rotors angebracht, sondern an dem Positionierelement. Der Steuerstift ragt durch eine Öffnung der Basisscheibe.

Eine weitere Verringerung der Positioniertoleranzen ergibt sich, wenn die Rastmulde der Meßkammer eng benachbart ist. Schließlich wird zur weiteren Verringerung der Positioniertoleranzen bei als Kunststofformteil ausgebildeten Einsatzelementen die Rastmulde und der größte Teil der Innenwand der Meßkammer von der Formfläche eines gemeinsamen, einstückigen Formwerkzeugteils einer Spritzgußform geformt.

Das Analysegerät kann problemlos automatisch mit Einsatzelementen beschickt werden. In einer konstruktiv einfachen Ausführungsform ist an dem Geräterahmen wenigstens ein Magazin beweglich geführt, welches eine Vielzahl zum Rotor hin offener Aufnahmen für Einsatzelemente aufweist. Bei dem Magazin kann es sich um eine Trommel mit am Umfangsmantel verteilten, achsparallelen Aufnahmen oder um eine Scheibe mit in Umfangsrichtung versetzten, radial verlaufenden, nutförmigen Aufnahmen handeln. Besonders einfache Magazine haben Tablettform und tragen die Einsatzelemente in zueinander parallelen, insbesondere nutförmigen, Aufnahmen. Eine Transporteinrichtung richtet die Aufnahmen nacheinander zum Einschiebeweg der in einer vorbestimmten Einsatzelement-Wechselposition stillstehenden Führungskammern des Rotors aus und schiebt die Einsatzelemente aus dem Magazin in die Führungskammer bzw. aus der Führungskammer in das Magazin.

Die Transporteinrichtung kann hierzu einen radial zur Drehachse des Rotors verschiebbar geführten Schlitten mit einem die Einsatzelemente fassenden Greifer aufweisen. Die Aufnahmen des Magazins, die Führungskammern und längs der Schlittenführung sich erstreckende Führungsflächen bilden einen im wesentlichen durchgehenden, geradlinigen Führungskanal, in welchem die Einsatzelemente verschiebbar aufliegen. Der Greifer muß deshalb nicht hubfest mit den Einsatzelementen gekuppelt werden. Es genügt, wenn er die Einsatzelemente längs des Führungskanals schieben oder ziehen kann. Der Greifer kann als einfacher, beweglich an dem Schlitten gehaltener Mitnehmer ausgebildet sein.

Um an dem Schlitten keine elektrischen Antriebe für die Bewegung des Greifers anbringen zu müssen und demzufolge auch keine der Schlittenbewegung folgenden elektrischen Zuleitungen, ist vorzugsweise vorgesehen, daß die Transporteinrichtung eine an dem Geräterahmen um eine zu der Schlittenführung parallele Achse drehbar gelagerte Nockenstange aufweist, entlang der der Greifer bei Verschiebung des Schlittens gleitet. Die Nockenstange wird von einem geräterahmenfesten Motor oder dergleichen gedreht und bringt in einer ersten Drehstellung den Greifer in Eingriff mit dem Einsatzelement und in einer zweiten Drehstellung außer Eingriff.

Die Einsatzelemente sind zweckmäßigerweise an einer ihrer in Verschieberichtung gesehen seitlichen Flächen mit einer magnetischen Datenträgerschicht versehen. Auf der Datenträgerschicht können Kenndaten der zu messenden Flüssigkeitsprobe als auch Programmdaten über das für das verwendete Einsatzelement spezifische zeitliche Rotationsprogramm gespeichert sein. Mittels eines Magnetkopfs können die Daten bei der Zuführung der Einsatzelemente zum Magazin oder zum Rotor gelesen und gegebenenfalls durch Ergebnisdaten oder dergleichen ergänzt werden.

Der Wandlerspalt des Magnetkopfs muß über seine gesamte Länge auf der Datenträgerschicht des Einsatzelements aufliegen. Hierzu muß der Magnetkopf und/oder ein ihm gegenüber angeordnetes Führungsteil für das Einsatzelement beweglich gelagert sein. In einer bevorzugten Ausführungsform weist das Führungsteil zwei in Verschieberichtung der Einsatzelemente parallele, vom Magnetkopf weg aufeinander zu geneigte Führungsflächen zur Kantenführung benachbarter, paralleler Längskanten des Einsatzelements auf. Das Einsatzelement kann auf diese Weise um seine Längsachse kippen und sich an den Magnetkopf anlegen. Der Magnetkopf ist zweckmäßigerweise zusätzlich kardanisch aufgehängt, beispielsweise an einer etwa parallel zur Datenträgerschicht verlaufenden Blattfeder.

Für hinreichend genaue Meßergebnisse müssen die Reaktionen in dem Einsatzelement bei konstanter, vorgegebener Temperatur von beispielsweise 37°C $\pm$ 0,1°C durchgeführt werden. Das Konstanthalten der Temperatur gelingt außerordentlich gut, wenn der die Einsatzelemente aufnehmende Innenraum des Rotors im wesentlich geschlossen ist und über eine zentrische Öffnung des Rotors mit Luft aus einer mittels eines ersten Regelkreises temperaturgeregelten Luftquelle beschickbar ist. Der Innenraum des Rotors kann hierbei, wie bereits erwähnt, durch rotorfeste oder gehäusefeste Wände abgeschlossen sein. Insbesondere sind die Führungskammern so ausgebildet, daß sie radiale Luftleitkanäle entlang der Einsatzelemente bilden und die Einsatzelemente im wesentlichen vollständig umschließen. Die Luftverwirbelung bei Rotation des Rotors hat auf diese Weise den geringsten Einfluß auf die Temperatur im Bereich der Einsatzelemente. Die über die zentrische Öffnung zugeführte, temperierte Luft wird weitgehend zur Temperierung der Einsatzelemente ausgenutzt.

Die spezielle Luftzufuhr in den Rotorbereich hat eine besonders kurze Zeitkonstante für die Temperaturregelung zur Folge. Dies kann vorteilhaft dadurch ausgenutzt werden, daß während des Beladungsvorganges der Einsatzelemente die Luftzufuhr gänzlich abgeschaltet wird, um Verdunstungserscheinungen zu reduzieren. Es genügt, die Luftzufuhr erst kurz vor der Messung wieder einzuschalten. Ferner erlaubt diese Art der Luftzufuhr, daß bereits mit einem einzigen Regelkreis die Temperatur hinreichend konstant im Rotorbereich eingestellt werden kann. Der Rotor kann zur weiteren Verbesserung der Temperaturregeleigenschaften aber zusätzlich noch in einem im wesentlichen geschlossenen, den Geräterahmen bildenden oder umschließenden Gehäuse angeordnet sein, dessen Luft-Innentemperatur über eine Heizeinrichtung mittels eines zweiten Regelkreises temperaturregelbar ist. Ggf. kann eine die Rotation des Rotors steuernde Steuerung bei Zentrifugalbetrieb den Solltemperaturwert des ersten Regelkreises eine vorbestimmte Zeitdauer vor Beginn des Zentrifugalbetriebs um einen vorbestimmten Temperaturwert ändert, beispielsweise absenkt, um der Temperaturänderung aufgrund der durch die Rotation aus dem Gehäuse angesaugten Umgebungsluft entgegenzuwirken.

Zum Messen der tatsächlichen Temperatur am Ort der Einsatzelemente ist zweckmäßigerweise in einer der Führungskammern des Rotors bleibend eine Temperaturfühleinrichtung in einem der Einsatzelementform entsprechenden Gehäuse angeordnet. Die der gemessenen Temperatur entsprechenden Signale können über Optokoppler oder über Schleifringe oder dergleichen zu der Steuerung und gegebenenfalls den Regelkreisen übertragen werden.

Es soll hervorgehoben werden, daß die vorstehend erläuterte Temperatursteuerung auch bei anderen Formen von Analysegeräten eingesetzt werden kann.

Ein weiterer Aspekt der Erfindung, der ebenfalls auch bei anderen Analysegeräten als den vorstehend erläuterten Geräten eingesetzt werden kann, zeigt einen Weg, wie die Unwucht des Rotors bei teilweisem Beladen auf einfache Weise reduziert werden kann, insbesondere, wenn die Gesamtzahl der zu ladenden Einsatzelemente nicht vor dem Beladen festliegt. Hierzu ist vorgesehen, daß der Beladebetrieb des Rotors durch eine Steuerung steuerbar ist, die nach Beschicken einer vorbestimmten Anzahl benachbarter Halterungen des Rotors mit Einsatzelementen in gleichbleibenden Beschickungsdrehsinn abwechselnd entweder eine den zuletzt beschickten Halterungen im wesentlichen diametral gegenüberliegende vorbestimmte Anzahl einander benachbarter Halterungen oder eine den zuletzt beschickten Halterungen benachbarte vorbestimmte Anzahl wiederum benachbarter Halterungen mit Einsatzelementen beschickt. Die vorbestimmte Anzahl entspricht der die jeweils maximal zulässige Unwucht erzeugenden Zahl an Einsatzelementen. Da der Rotor nicht nach jedem Beschickungsschritt um etwa 180° gedreht werden muß, sondern jeweils abwechselnd benachbarte und diametral gegenüberliegende Halterungen beschickt werden, kann die Belade- und Entladezeit des Rotors trotz des Unwuchtausgleichs relativ kurz gehalten werden. Um die Unwucht möglichst klein zu halten, wird zweckmäßigerweise nach dem Beschicken jeweils einer einzigen Halterung anschließend die etwa diametral gegenüberliegende Halterung und die im Beschickungsdrehsinn unmittelbar benachbarte Halterung mit jeweils einem Einsatzelement belegt. Das Entladen des Rotors kann entsprechend erfolgen.

Ein weiterer, ebenfalls auch bei anderen als den erfindungsgemäßen Analysegeräten verwendbarer Aspekt der Erfindung zur Vermeidung von Unwuchterscheinigungen beim Beladen und Entladen des Rotors, besteht darin, daß der Rotor für jede Halterung ein radial zwischen einer inneren und einer äußeren Position bewegliches Fliehgewicht trägt und daß das in die Halterung eingesetzte Einsatzelement das Fliehgewicht seiner Halterung in der inneren Position verrastet. Die innere Position, die äußere Position sowie das Gewicht des Fliehgewichts und des Einsatzelements sind aufeinander so abgestimmt, daß das Fliehgewicht in der äußeren Position im wesentlichen die gleiche Zentrifugalkraft erzeugt, wie das von dem Einsatzelement in der inneren Position verrastete Fliehgewicht und das Einsatzelement zusammen. Bei radial einschiebbaren Einsatzelementen ist das Fliehgewicht zweckmäßigerweise radial verschiebbar an dem Rotor geführt und wird beim Einschieben des Einsatzelements von diesem aus der äußeren Position in die innere Position mitgenommen. Bei dem Fliehgewicht handelt es sich zweckmäßigerweise um einen Bestandteil des Stellorgans, z.B. um einen Arm des vorstehend erwähnten Hebels oder das Druckstück.

Im folgenden sollen die Aspekte der Erfindung anhand von Zeichnungen näher erläutert werden. Es zeigt:

Fig. 1   eine schematische Draufsicht auf ein Zentrifugal-Analysegerät;

Fig. 2   eine schematische Schnittansicht einer Transporteinrichtung zum Zuführen von Einsatzelementen, gesehen entlang einer Linie II-II aus Fig. 1;

Fig. 3   eine schematische Teilansicht eines Rotors des Analysegeräts nach Fig. 1 mit eingeführtem und positioniertem Einsatzelement;

Fig. 4   eine schematische Teilansicht des Rotors entsprechend Fig. 3, jedoch mit aus der positionierten Stellung ausgelenktem Einsatzelement;

Fig. 5   eine Radialansicht des Rotorausschnitts gesehen entlang einer Linie V-V in Fig. 4;

Fig. 6   eine Draufsicht auf eine Magnetkopf-Leseeinrichtung des Analysegeräts nach Fig. 1;

- 14 -

Fig. 7    eine schematische Schnittansicht der Leseeinrichtung, gesehen entlang einer Linie VII-VII in Fig. 6;

Fig. 8    eine schematische Darstellung der Temperaturregeleinrichtungen zum Konstanthalten der Rotortemperatur;

Fig. 9    eine schematische Darstellung des Rotors des Analysegeräts nach Fig. 1 zur Erläuterung des von einer
Steuerung nach einem vorbestimmten Beschickungs-
und/oder Entladeprogramms durchgeführten Unwuchtausgleichs;

Fig. 10   eine schematische Darstellung eines bei dem Analysegerät nach Fig. 1 verwendbaren Rotors mit Fliehgewichten zum Unwuchtausgleich bei teilweise mit
Einsatzelementen beschicktem Rotor;

Fig. 11   eine schematische Teilansicht einer anderen Ausführungsform eines bei dem Zentrifugal-Analysegerät
gemäß Fig. 1 verwendbaren Rotors mit eingeführtem
und positioniertem Einsatzelement;

Fig. 12   eine Schnittansicht des Rotors entlang der Linie
XII-XII aus Fig. 11 und

Fig. 13   eine teilweise Draufsicht auf das ein Positionierorgan tragendes Ende eines in den Rotoren der Fig.
1 und 11 verwendbaren Einsatzelements, gesehen in
radialer Richtung des Rotors.

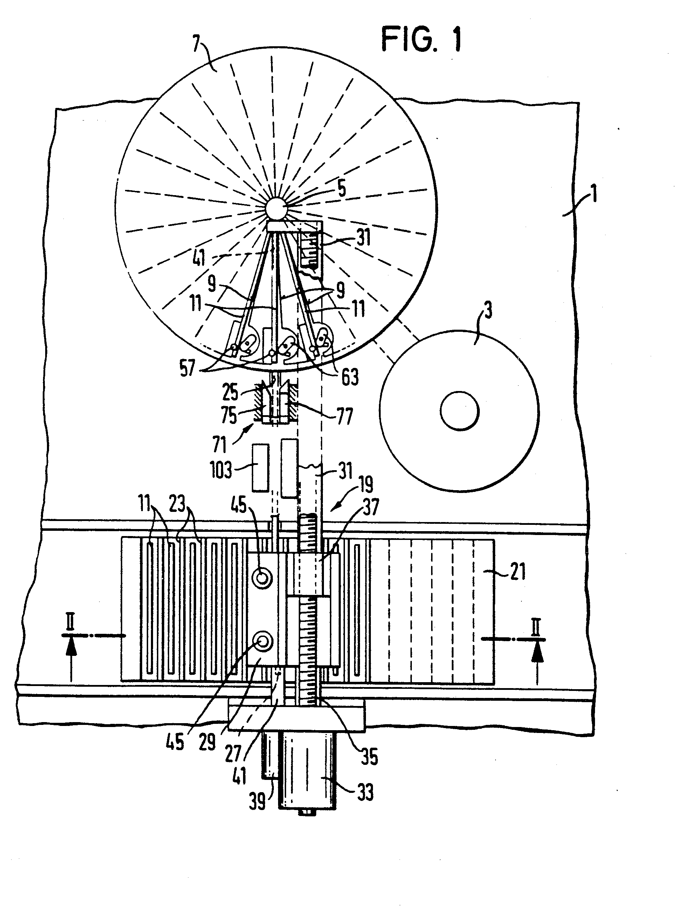

Das in Fig. 1 dargestellte Zentrifugal-Analysegerät, insbesondere für die chemische Analyse von Blut- und Serumbestandteilen, trägt an einem schematisch dargestellten
Geräterahmen 1 einen von einem elektrischen Motor 3
um eine Drehachse 5 angetriebenen Rotor 7. Der Rotor 7
weist eine Vielzahl mit gleichen Winkelabständen um die
Drehachse 5 herum angeordnete, im wesentlichen radial verlaufende und nach radial außen hin offene Führungskammern 9 auf, in die, wie nachstehend noch näher erläutert wird, langgestreckte Einsatzelemente 11 einschiebbar sind. Der Übersichtlichkeit wegen sind in Fig. 1 lediglich drei der Führungskammern 9 dargestellt.

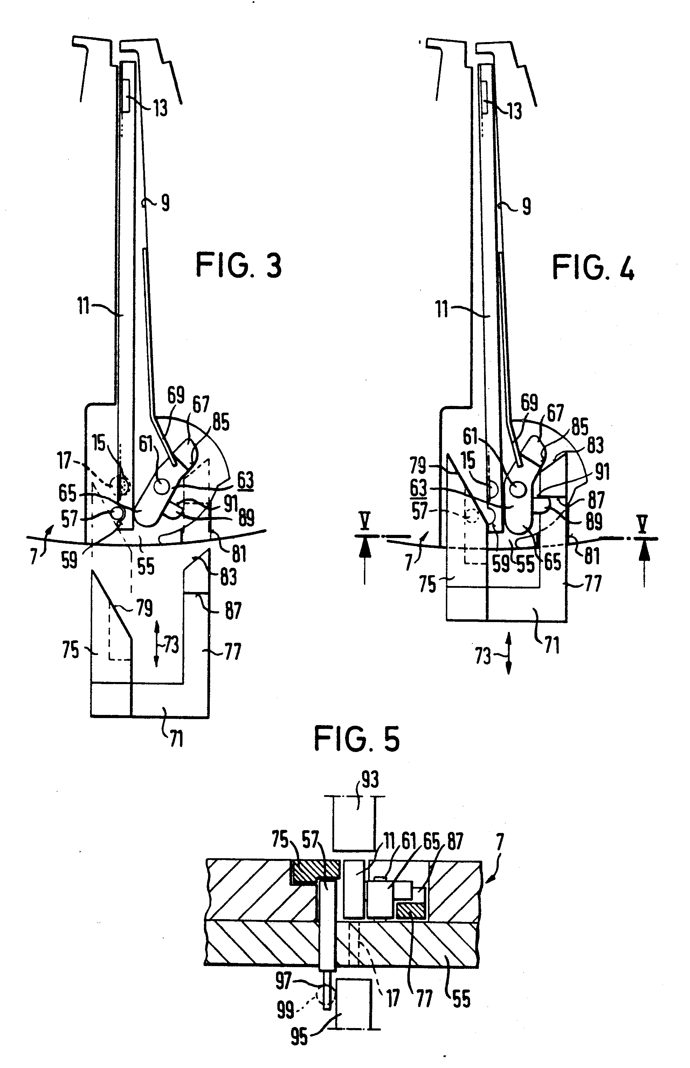

Die Einsatzelemente 11 weisen, wie am besten die Fig. 3 und 4 zeigen, an ihrem der Drehachse zugewandten Ende eine nach oben offene Beschickungsöffnung 13 auf, in die in nicht näher dargestellter Weise vor dem Einführen der Einsatzelemente 11 in den Rotor 7 die zu analysierende Flüssigkeit in vorbestimmter Menge eingefüllt wird. Jedes Einsatzelement 11 enthält wenigstens eine Mischkammer, in der die zu analysierende Flüssigkeit bei Rotation des Rotors 7 mit einer bereits herstellerseitig in das Einsatzelement eingebrachtem, trockenen oder flüssigen Reagenz vermischt wird. Jedes Einsatzelement 11 umfaßt ferner an seinem radial äußeren Ende eine Küvette oder optische Meßkammer 15, in die die zu analysierende Flüssigkeit über nicht dargestellte Verbindungskanäle aus der Mischkammer bzw. den Mischkammern bei Rotation des Rotors 7 eingebracht wird. Die Rotation des Rotors 7 wird hinsichtlich Drehzahl und Zeitdauer so gesteuert, daß das Mischen der Reagenzien, die Inkubation und der Reaktionsablauf in vorbestimmter Weise erfolgt. Der Drehweg der optischen Meßkammer 15 kreuzt den bei 17 angedeuteten, ortsfest parallel zur Drehachse des Rotors 7 verlaufenden Strahlengang eines nicht näher dargestellten Photometers, insbesondere eines bei mehreren Lichtwellenlängen betreibbaren polychromatischen Photometers, welches die Absorption bzw. Extinktion der in der Meßkammer 15 enthaltenen Flüssigkeit mißt.

Der Rotor 7 wird selbsttätig mittels einer in Fig. 1 bei 19 schematisch dargestellten Transporteinrichtung mit Einsatzelementen beschickt, die in einer nicht näher dargestellten, dem Analysegerät vorgeordneten Beschickungsstation ebenfalls selbsttätig mit den zu analysierenden Flüs-

sigkeitsproben beschickt wurden. Für den Transport der Einsatzelemente sind tablettförmige, flache Magazine 21 vorgesehen, die von der Transporteinrichtung 19 etwa in der Ebene des Rotors 7 tangential zum Rotor 7 verschiebbar sind. Die Magazine 21 halten die Einsatzelemente 11 in nach oben und zum Rotor hin offenen, nutförmigen Aufnahmen 23. Die Aufnahmen 23 verlaufen zueinander parallel und senkrecht zur Verschieberichtung des Magazins 21.

Die Transporteinrichtung 19 richtet die Aufnahmen 23 zu einem bei 25 schematisch angedeuteten Führungskanal aus, der die in einer Einsatzelement-Wechselposition sich befindende Aufnahme geradlinig fluchtend mit der für den Wechsel des Einsatzelements stillstehenden Führungskammer 9 des Rotors 7 verbindet. Der Führungskanal 25 ist so ausgebildet, daß das aus der Aufnahme des Magazins 21 in die Führungskammer einzuschiebende, bzw. aus der Führungskammer in die Aufnahme des Magazins zurückzuführende Einsatzelement während des gesamten Verschiebewegs geschoben bzw. gezogen werden kann, ohne angehoben werden zu müssen. Die Transporteinrichtung 19 weist hierzu einen Greifer 27 auf, der in nachstehend noch näher erläuterter Weise etwa vertikal verschiebbar an einem Schlitten 29 der Transporteinrichtung 19 gehalten ist. Der Schlitten 29 ist an einer parallel zum Führungskanal 25 verlaufenden Führung 31 verschiebbar geführt und transportiert bei abgesenktem Greifer 27 Einsatzelemente aus der Aufnahme 23 des Magazins in die Führungskammer 9 und umgekehrt.

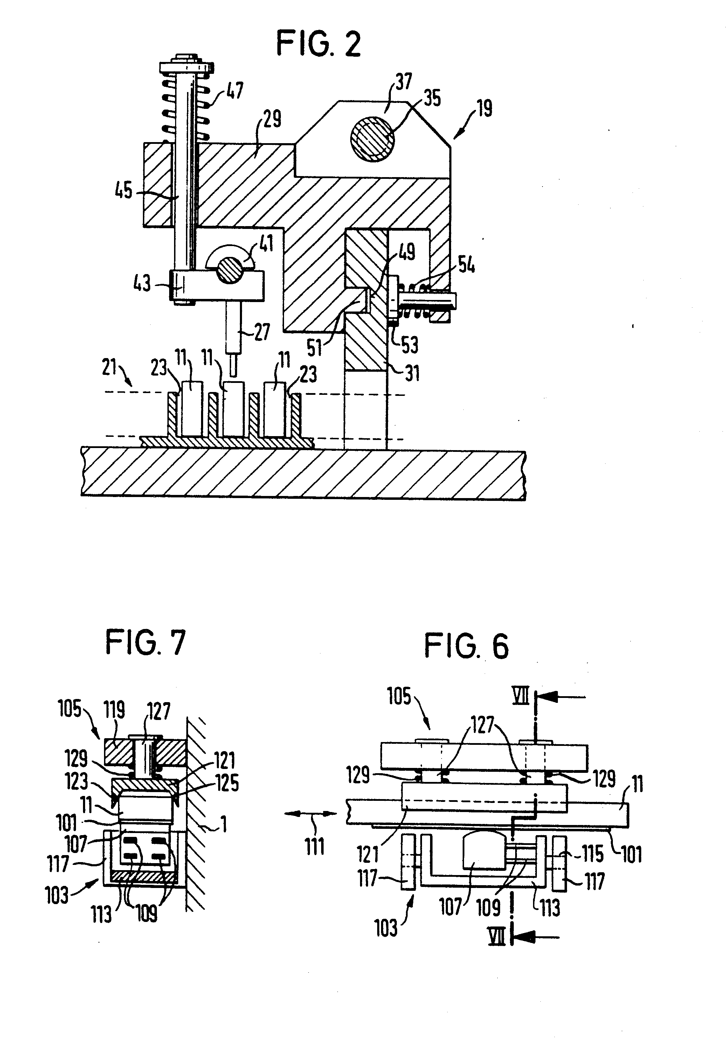

Der Schlitten 29 wird in beiden Verschieberichtungen von einem am Geräterahmen 1 angeflanschten Motor 33 über eine zur Führung 31 parallele Gewindespindel 35 angetrieben. Die Gewindespindel 35 wirkt mit einer schlittenfesten Spindelmutter 37 zusammen. Die Hubbewegung des Greifers 27 wird von einem ebenfalls am Geräterahmen 1 angeflanschten Motor 39 gesteuert, welcher eine Nockenstange 41 um eine zur Gewindespindel 35 und zur Führung 31 parallele Drehachse dreht. Die Nockenstange 41 erstreckt sich über den gesamten Verschiebeweg des Schlittens 29 und wirkt, wie am besten Fig. 2 zeigt, mit einer Halterung 43 des Greifers 27 zusammen. Die Halterung 43 ist an zwei Führungsstangen 45 an dem Schlitten 29 vertikal verschiebbar geführt und wird von Schraubendruckfedern 47, die die Führungsstangen 45 umschließen, nach oben gegen die Nockenstange 41 vorgespannt. Das Querschnittsprofil der Nockenstange 41 ist so gewählt, daß in einer ersten Drehstellung die Federn 47 den Greifer 27 aus dem Verschiebeweg der Einsatzelemente 11 herausheben können und in einer zweiten Stellung die Nockenstange 41 den Greifer 27 in den Verschiebeweg absenkt. Bei dem Greifer kann es sich um eine Gabel handeln, die die Einsatzelemente in Verschieberichtung zwischen ihren Schenkeln einschließt. An den Einsatzelementen können jedoch auch in Hubrichtung des Greifers 27 sich erstreckende Öffnungen vorgesehen sein, in die ein beispielsweise stiftförmiger Greifer eintauchen kann.

Fig. 2 zeigt Einzelheiten der Schlittenführung. Die Führung 31 ist als Flachbettführung ausgebildet und weist an ihrer einen Flachseite eine in Verschieberichtung sich erstreckende Nut 49 auf, in die eine Rippe 51 des Schlittens 29 eingreift. Ein an dem Schlitten 29 quer zur anderen Flachseite der Führung 31 verschiebbar geführter Gleitstempel 53 wird von einer am Schlitten 29 abgestützten Druckfeder 54 gegen diese andere Flachseite vorgespannt.

Die Transporteinrichtung 19 schiebt die Einsatzelemente 11 im wesentlichen radial in die in der Einsatzelement-Wechselposition stillstehende Führungskammer 9 ein. In Umfangsrichtung des Rotors 7 seitlich des Einschiebewegs steht in jeder Führungskammer 9 von einer Basisplatte 55 (Fig. 5) des Rotors 7 ein Positionierstift 57 nach oben ab. Die Führungskammer 9 ist so ausgebildet, daß das Einsatzelement 11 in Umfangsrichtung des Rotors 7 auf den Positionierstift 57 zu verschoben werden kann. Es trägt eine Positioniermulde 59, in die der Positionierstift 57 bei betriebsmäßig eingesetztem Einsatzelement 11 eingreift und das Einsatzelement 11 an dem Rotor 7 verrastet sowie zum Strahlengang 17 des Photometers bzw. dessen rotorfesten Triggereinrichtungen ausrichtet. Zur Erhöhung der Positioniergenauigkeit ist die Positioniermulde 59 am radial äußeren Ende des Einsatzelements 11 der Meßkammer 15 eng benachbart vorgesehen.

Auf der dem Positionierstift 57 in Umfangsrichtung abgewandten Seite des Einsatzelements 11 ist an einem zur Drehachse parallelen Zapfen 61 ein doppelarmiger Hebel 63 schwenkbar gelagert, wie dies am besten aus Fig. 3 zu ersehen ist. Der Hebel 63 weist zwei etwa diametral zum Zapfen 61 abstehende Arme 65 und 67 auf, von denen der Arm 65 in Radialrichtung des Rotors auf der Außenseite des Zapfens 61 und der Arm 67 auf der Innenseite gelegen ist. Eine an dem Rotor befestigte Blattfeder 69 spannt den Hebel 63 mit solcher Schwenkrichtung vor, daß der Arm 65 auf den Positionierstift 57 zu geschwenkt wird. Die Blattfeder 69 schiebt das von der Transporteinrichtung 19 in die Führungskammer 9 radial eingeschobene Einsatzelement 11 in Umfangsrichtung des Rotors 7 zum Positionierstift 57 hin und hält den Positionierstift 57 in Eingriff mit der Positioniermulde 59. Der Arm 67 verläuft in dieser Eingriffsstellung auf der dem Positionierstift 57 abgewandten Seite des Zapfens 61. Seine Masse und seine Form ist so bemessen, daß sein durch die Zentrifugalbeschleunigung verursachtes Drehmoment größer ist als das des Arms 65, so daß er als Fliehgewicht wirkt, welches bei Rotation des Rotors 7 die Rastkraft der Blattfeder 69 verstärkt.

Das von der Transporteinrichtung 19 aus der Führungskammer 9 herauszuziehende Einsatzelement 11 wird von einer Auswerfergabel 71 aus der Verrastung des Positionierstifts 57 gelöst. Die Auswerfergabel 71 ist, wie Fig. 1 schematisch zeigt, im Bereich des Führungskanals 25 radial zum Rotor 7 verschiebbar. In den Fig. 3 und 4 ist die Verschieberichtung durch Doppelpfeile 73 angedeutet. Die Auswerfergabel 71 befindet sich in Ruhestellung außerhalb des Drehwegs des Rotors 7. Sie wird vom Schlitten 29 der Transporteinrichtung 19 mitgenommen und in den Drehweg des Rotors 7 eingeschoben. Die Auswerfergabel 71 weist auf gegenüberliegenden Seiten des Führungskanals 25 einen Auswerferfinger 75 und einen Riegelfinger 77 auf. Der in der Einsatzelement-Wechselposition auf der Seite des Positionierstifts 57 zum Rotor 7 hin abstehende Auswerferfinger 75 trägt an seinem freien Ende eine über dem Positionierstift 57 hinwegbewegbare Schrägfläche 79, die das an dem Positionierstift 57 verrastete Einsatzelement in Umfangsrichtung des Rotors 7 vom Positionierstift 57 abhebt. Der Riegelfinger 77 greift in der Einsatzelement-Wechselposition auf der dem Einsatzelement 11 in Umfangsrichtung des Rotors 7 abgewandten Seite des Zapfens 61 in einen Riegelkanal 81 ein und verrastet den Rotor geräterahmenfest. Der Riegelfinger 77 ist so bemessen, daß der Rotor 7 verrastet ist, bevor die Schrägfläche 79 das Einsatzelement 11 auszuwerfen beginnt.

Der Riegelfinger 77 trägt an seinem freien Ende stirnseitig eine Schubfläche 83, die mit einer zugeordneten Schubfläche 85 des Hebelarms 67 zusammenwirkt und bei verriegeltem Rotor 7 den Hebelarm 65 gegen den Widerstand der Blattfeder 69 vom Einsatzelement 11 abhebt. An dem Riegelfinger 77 ist ferner eine gegen seine Einschubrichtung weisende Sperrfläche 87 vorgesehen. An dem Hebelarm 65 ist eine Sperrnase 89 mit einer der Sperrfläche 87 entgegengerichteten Sperrfläche 91 angebracht. Die Sperrnase 89 und die Sperrfläche 87 sind so angeordnet, daß die Sperrfläche 91 der Sperrnase 89 bei ordnungsgemäß an dem Positionierstift 57 verrastetem Einsatzelement 11 außerhalb der Bewegungsbahn des Sperrfingers 77 steht.

Wird der Hebel 63 von der Schubfläche 83 ausgelenkt, so hintergreift die Sperrnase 89 die Sperrfläche 87. Die Sperrnase 89 verhindert das Zurückziehen der Auswerfergabel 71 bei nicht ordnungsgemäß verrastetem Einsatzelement 11, beispielsweise dann, wenn der Positionierstift 57 aufgrund radialer Fluchtungsfehler nicht in die Positioniermulde 59 eintauchen kann. Nicht näher dargestellte, von der Auswerfergabel 71 betätigte Steuerschalter verhindern das Inbetriebsetzen des Motors 3 und damit das Abschleudern des nicht verrasteten Einsatzelements 11.

Fig. 3 zeigt die Auswerfergabel 71 mit durchgehenden Linien in ihrer Ruhestellung, das heißt bei zu Rotation freigegebenem Rotor 7. Mit gestrichelten Linien ist in Fig. 3 die Auswerfergabel 71 in einer Position dargestellt, in der der Rotor 7 vom Riegelfinger 77 bereits verriegelt ist, die Auswerfergabel 71 jedoch noch nicht soweit in den Rotor eingeschoben ist, daß der Auswerferfinger 75 das Einsatzelement 11 aus seiner Verankerung gelöst hat. Fig. 4 zeigt die Auswerfergabel 71 in der Position, in der der Auswerferfinger 75 das Einsatzelement 11 vom Positionierstift 57 und der Riegelfinger 77 den Hebelarm 65 vom Einsatzelement 11 abgehoben hat.

Fig. 5 zeigt bei 93 und 95 angedeutet, Teile der Optik bzw. der Photodetektoren oder Lichtquellen des Photometers, dessen Strahlengang 17 durch nicht näher dargestellte axiale Bohrungen der Basisplatte 55 tritt. Die Indexierung der Basisplatte 55 wird durch einen einstückig an dem Positionierstift 57 angeformten Steuerstift 97 gesteuert. Der Steuerstift 97 steht auf der der Führungskammer 9 axial abgewandten Seite der Basisplatte 5 vor und kreuzt den Strahlengang einer bei 99 angedeuteten Steuerlichtschranke, die eine Blitzlichtquelle oder dergleichen des Photometers triggert, wenn die Meßkammer 15 des Einsatzelements 11 den Strahlengang 17 kreuzt. Da der Steuerstift 97 einstückig am Positionierstift 57 angeformt ist, wird die Triggergenauigkeit erhöht.

Die Positioniergenauigkeit der Meßkammer 15 relativ zum Positionierstift 57 läßt sich weiter erhöhen, wenn als Kunststofformteile ausgebildete Einsatzelemente benutzt werden, bei welchen die Positioniermulde 59 und die Zylinderwand der im wesentlichen halbzylindrischen Meßkammer von Formflächen desselben einstückigen Formwerkzeugteils, beispielsweise im Spritzgußverfahren geformt werden.

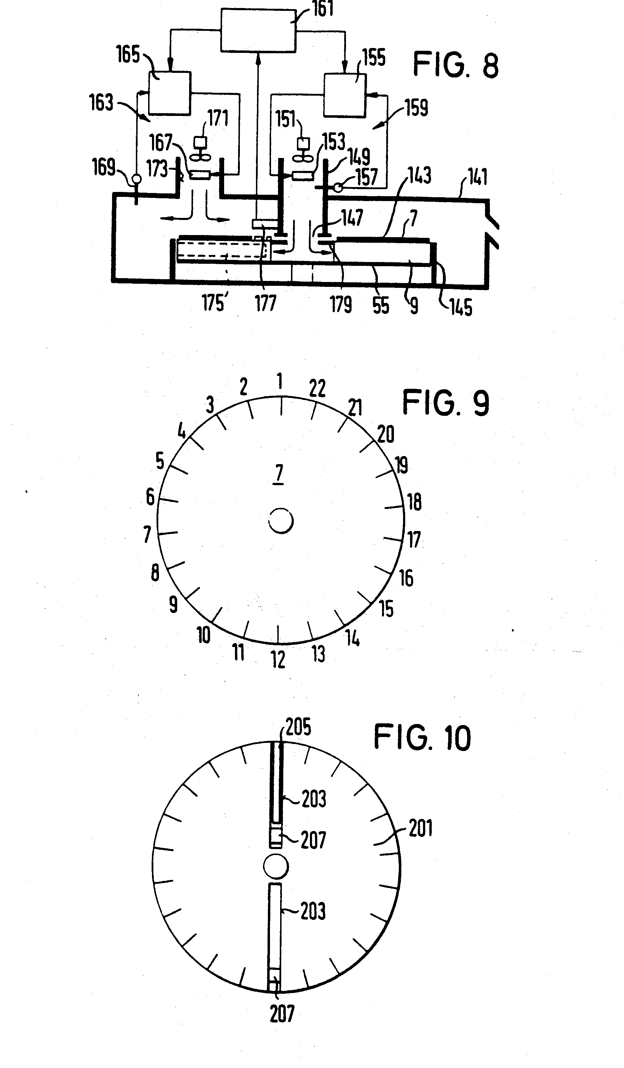

Der Betrieb des Zentrifugal-Analysegeräts wird nach einem vorgegebenen Programm abhängig von Daten gesteuert, die auf einer Magnetschicht 101 (Fig. 6) auf einer in Verschieberichtung seitlichen Fläche des Einsatzelements 11 gespeichert sind. Die Magnetschicht 101 kann zusätzliche Daten tragen, die der Identifizierung der Probe dienen. Gegebenenfalls können auf der Magnetschicht 101 Ergebnisdaten gespeichert sein. Die Daten werden mittels einer Magnetkopfeinheit 103 während der Verschiebebewegung des Einsatzelements 11 gelesen bzw. geschrieben. Eine Führungseinheit 105 führt das Einsatzelement 11 während es an der Magnetkopfeinheit 103 vorbeibewegt wird. In Fig. 1 ist die Magnetkopfeinheit 103 im Bereich des Führungskanals 25 zwischen dem Magazin 21 und dem Rotor 7 angeordnet. Die Magnetkopfeinheit 103 kann jedoch auch an anderer Stelle vorgesehen sein, insbesondere im Bereich einer die Einsatzelemente des Magazins mit Flüssigkeitsproben beschickenden Vorrichtung.

Die Magnetkopfeinheit 103 und die Führungseinheit 105 sind so ausgebildet, daß die Magnetschicht 101 auf der ganzen Länge des Arbeitsspalts eines Magnetkopfs 107 (Fig. 6 und 7) der Magnetkopfeinheit 103 anliegt. Der Magnetkopf 107 ist an vier Blattfedern 109 quer zu der durch einen Pfeil 111 angedeuteten Verschieberichtung des Einsatzelements 11 federnd auslenkbar an einem Rahmenteil 113 gehalten. Der Rahmenteil 113 ist um eine in Verschieberichtung 111 verlaufende Drehachse 115 schwenkbar an geräterahmenfesten Flanschen 117 gelagert. Der Führungsteil 105 trägt an einem geräterahmenfesten Flansch 119 eine Führungsschiene 121 mit zwei vom Magnetkopf 107 weg aufeinander zu geneigten Führungsflächen 123, 125. Die aufeinander zu geneigten Führungsflächen 123, 125 führen die einander gegenüberliegenden Längskanten der von der Magnetschicht 101 abgewandten Seitenfläche. Aufgrund dieser Führung kann das Einsatzelement 11 um seine Längsachse kippen. Die Führungsschiene 121 ist an zwei Zapfen 127 quer zur Verschieberichtung 111 beweglich an dem Flansch 119 geführt und wird von Druckfedern 129 zur Magnetkopfeinheit 103 hin vorgespannt.

Fig. 8 zeigt in einem Blockschaltbild Einzelheiten der Temperaturregeleinrichtungen zum Konstanthalten der Temperatur des Rotors 7. Der Rotor 7 ist in einem Gehäuse 141 angeordnet, wobei sein im wesentlichen durch die Führungskammern 9 gebildeter, die Einsatzelemente aufnehmender Innenraum, zum Inneren des Gehäuses nahezu vollständig abgeschlossen ist. Die Unterseite des Innenraums wird durch die bereits erwähnte Basisplatte 55 gebildet, die Oberseite durch eine Deckplatte 143 oder, durch eine Vielzahl vom Greifer der vorerwähnten Transporteinrichtung auslenkbarer Deckel, die die Führungskammern 9 nach oben hin abschließen. Die Umfangsfläche des Rotors 7 wird durch eine gehäusefeste Wand 145 verschlossen, die die Umfangsfläche mit geringem Abstand umgibt und im wesentlichen lediglich die Einschuböffnung der Einsatzelement-Wechselposition offenläßt.

In eine zentrische Öffnung 147 auf der Oberseite des Rotors 7 mündet ein Luftkanal 149 den eine aus einem Ventilator 151 und einem Heizelement 153 bestehende Warmluftquelle mit Warmluft beschickt, die den Innenraum des Rotors 7 temperiert. Das Heizelement 153 und/oder gegebenenfalls der Ventilator 151 bilden zusammen mit einem Regler 155 und einem die Lufttemperatur beispielsweise in dem Kanal 149 messenden Temperaturfühler 157 einen Temperaturregelkreis 159, der die Temperatur der dem Innenraum des Rotors 7 zugeführten Luft auf einem über eine Steuerung 161 vorgebbaren Sollwert hält.

Ein zweiter Temperaturregelkreis 163 regelt die Temperatur der Luft im Inneren des Gehäuses 141, jedoch außerhalb des Rotors 7. Der Regelkreis 163 umfaßt einen Regler 165, der ein Heizelement 167 abhängig von der mittels eines Temperaturfühlers 169 im Inneren des Gehäuses 141 gemessenen Lufttemperatur auf einem von der Steuerung 161 vorgegebenen Sollwert hält. In Fig. 8 ist die Heizeinrichtung 167 im Bereich einer mit einem Ventilator 171 versehenen Luftzuströmöffnung 173 vorgesehen. Zweckmäßig sind auch Ausführungsformen, bei welchen die Heizeinrichtung großflächig den Rotor überlappt.

Die Sollwerte der Regelkreise 159, 163 können unabhängig voneinander eingestellt werden. Bei den Reglern 155, 165 handelt es sich bevorzugt um PID-Regler, das heißt um Regler mit Proportional-, Integral- und Differentialverhalten. Mit Hilfe solcher Regelkreise läßt sich die Innentemperatur des Rotors 7 innerhalb sehr geringer Fehlergrenzen auch während des Rotationsbetriebs konstant halten, beispielsweise auf 37° $\pm$ 0,1°C. Um die tatsächliche Innentemperatur möglichst praxisgerecht überwachen zu können, ist in einer der Führungskammern ein in Fig. 8 bei 175 angedeuteter Temperaturfühler angeordnet. Der Temperaturfühler sitzt in einem Gehäuse, dessen Abmessungen und Form der Form der Einsatzelemente entspricht. Ein bei 177 dargestellter Optokoppler überträgt die Temperaturinformation zur Steuerung 161. Die Energieversorgung des Temperaturfühlers 175 erfolgt über Schleifringe 179 oder auf induktiv-transformatorischem Weg. Die Temperaturinformation des Temperaturfühlers 175 kann zur Steuerung des Sollwerts zumindest eines der beiden Temperaturregelkreise ausgenutzt werden. Um der Temperaturänderung im Inneren des Rotors 7 beim Zentrifugierbetrieb Rechnung zu tragen, kann die Steuerung 161 so ausgebildet sein, daß sie den Sollwert des Regelkreises 159 eine vorbestimmte Zeitspanne vor Beginn des Zentrifugierbetriebs um einen vorbestimmten Korrekturbetrag ändert, bei höherer Umgebungstemperatur beispielsweise erniedrigt, um der nachfolgenden Erwärmung durch die beim Zentrifugieren angesaugte Umgebungsluft entgegenzuwirken.

Unwuchtschwingungen des Rotors wirken sich nachteilig auf die Meßgenaugigkeit des Zentrifugal-Analysegeräts aus. Die Unwuchtschwingungen können auf ein Minimum verringert werden, wenn das Beladen und Entladen des Rotors durch eine Steuerung so gesteuert wird, daß nach Zuführen oder Entnehmen einer vorbestimmten, die maximale Unwucht bestimmenden Anzahl an Einsatzelementen jeweils dieselbe Anzahl Einsatzelemente auf der im wesentlichen diametral gegenüberliegenden Seite des Rotors zugeführt bzw. entnommen wird. Fig. 9 zeigt schematisch den Rotor, wobei die Halterungen bzw. Führungskammern gegen den Uhrzeigersinn fortlaufend von 1 bis 22 numeriert sind. Wird lediglich die von einem einzigen Einsatzelement hervorgerufene Unwucht zugelassen, so kann der Rotor beispielsweise nach folgendem Schema beladen werden: 1-12-2-13-3-14- usw.. Wird die Unwucht von zwei Einsatzelementen zugelassen, so könnte das Beladeschema lauten: 1,2 - 12,13 - 3,4 - 14,15 - usw.. Das Entladen des Rotors kann nach einem analogen Schema erfolgen.

Bei dem vorstehenden Be- bzw. Entladeschema wird nach dem Be- bzw. Entladen der vorbestimmten Anzahl Einsatzelemente der Rotor jeweils etwa um 180° gedreht. Die Belade- bzw. Entladezeit kann verkürzt werden, wenn nach dem Beladen bzw. Entladen der vorbestimmten Anzahl benachbarter Halterungen des Rotors in gleichbleibendem Beschickungsdrehsinn abwechselnd entweder die den zuletzt beschickten Halterungen im wesentlichen diametral gegenüberliegende vorbestimmte Anzahl benachbarter Halterungen oder die den zuletzt beschickten Halterungen in dem Beschickungsdrehsinn benachbarte vorbestimmte Anzahl Halterungen beschickt bzw. entladen wird. Bei einer maximaler Unwucht von einem einzigen Einsatzelement könnte das Beschickungs- bzw. Entladeschema folgendermaßen lauten: 1-12-13-2-3-14-15- usw.. Bei einer maximalen Unwucht von zwei Einsatzelementen lautet das Beschickungs- bzw. Entladeschema: 1,2-12,13-14,15-3,4-5.,6- usw..

Soweit, wie anhand der Fig. 8 erläutert wurde, eine der Halterungen bzw. Führungskammern durch ein Temperaturfühlerelement ständig besetzt ist, muß selbstverständlich die Unwucht dieses Elements berücksichtigt werden. Der Beladezyklus beginnt deshalb an der dem Temperaturelement diagonal gegenüberliegenden Halterung, wobei der Beladezyklus von dem Temperaturfühlerelement aus gezählt wird.

Fig. 10 zeigt schematisch einen anstelle des Rotors 7 verwendbaren Rotor 201, der für jede Halterung 203 eines Einsatzelements 205 ein Fliehgewicht 207 aufweist. Das Fliehgewicht 207 ist zwischen einer in Fig. 10 unten dargestellten, radial äußeren Position und einer in Fig. 10 oben dargestellten radial inneren Position beispielsweise durch Einsetzen des Einsatzelements 205 verschiebbar. In der radial inneren Position ist das Fliehgewicht 207 von dem eingesetzten Einsatzelement 205 verrastet. Die innere Position, die äußere Position, die Masse des Fliehgewichts 207 und die Masse des Einsatzelements 205 sind so bemessen, daß die von dem in der äußeren Position sich befindenden Fliehgewicht 207 bei fehlendem Einsatzelement erzeugte Zentrifugalkraft gleich der Zentrifugalkraft ist, die das Einsatzelement und das in der inneren Position sich befindende Fliehgewicht erzeugt. Bei einem derartigen Rotor können die Halterungen willkürlich beladen bzw. entladen werden.

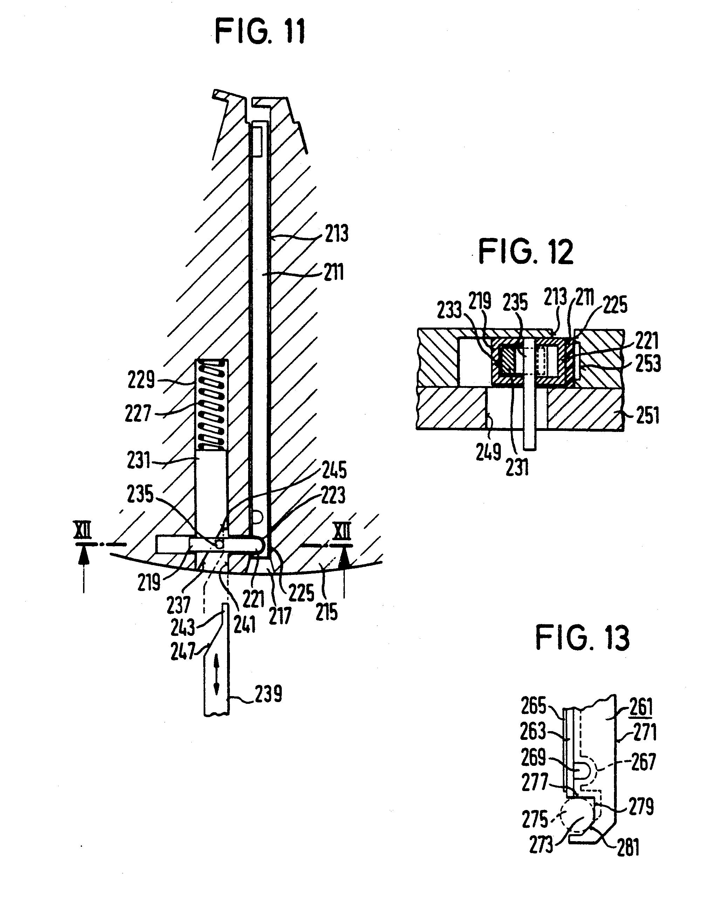

Die Fig. 11 und 12 zeigen eine andere Ausführungsform einer Halterung für ein dem Einsatzelement 11 der Fig. 1 entsprechendes Einsatzelement 211. Das Einsatzelement 211 sitzt in einem im wesentlichen radial verlaufenden Führungskanal 213 eines um eine zentrische Drehachse drehbaren Rotors 215. Der Rotor 215 weist eine Vielzahl derartiger Führungskammern 213 auf, die um seine Drehachse mit gleichen Winkelabständen versetzt angeordnet sind. Die Einsatzelemente 211 haben langgestreckte Form und Rechteckquerschnitt. Eine nicht näher dargestellte Transporteinrichtung, ähnlich der Transporteinrichtung 19 in Fig. 1, führt das Einsatzelement 211 selbsttätig über eine Öffnung 217 in die Führungskammer 213 ein.

Seitlich des Einschiebewegs jeder Führungskammer 213 ist an dem Rotor 215 ein Positionierelement 219 tangential zur Radiusrichtung der Führungskammer 213 verschiebbar geführt. Das Positionierelement 219 trägt an seinem in Verschieberichtung der Führungskammer 213 zugewandten Ende eine Positionierleiste 221, die in der der Führungskammer 213 entfernt gelegenen Schiebeposition den Einschiebequerschnitt der Führungskammer 213 freigibt und in der anderen Verschiebeposition in eine zum Positionierelement 219 hin offene Positioniermulde 223 des Einsatzelements 211 eingreift. Das in die Führungskammer 213 eingeführte Einsatzelement 211 wird von dem Positionierelement 219 gegen eine in Umfangsrichtung des Rotors 215 weisende Seitenwand 225 gedrückt und in Umfangsrichtung positioniert. In radialer Richtung wird das Einsatzelement 211 durch den in die Positioniermulde 223 eingreifende Positionierleiste 221 positioniert und verriegelt. Das Positionierelement 219 ist in Fig. 12 als Rahmen dargestellt; es kann aber auch andere Form, z.B. U-Form haben.

Zur Erzeugung der Andruckkraft des Positionierelements 219 ist eine Druckfeder 227 vorgesehen, die in einer Kammer 229 des Rotors 215 ein Druckstück 231 im wesentlichen radial nach außen zum Positionierelement 219 hin vorspannt. Das radial äußere Ende des Druckstücks 231 durchsetzt eine

Öffnung 233 des Positionierelements 219, in der ein am Positionierelement 219 befestigter Stift 235 parallel zur Drehachse des Rotors 215 verläuft. Der in die Öffnung 233 eingreifende Teil des Druckstücks 231 hat Keilform und trägt eine zur Verschieberichtung des Druckstücks 231 geneigte, zur Drehachse des Rotors 215 ebenfalls parallele Schubfläche 237. Die an dem Stift 235 angreifende Schubfläche 237 drückt das Positionierelement 219 unter der Wirkung der Druckfeder 227 zur Seitenfläche 225 der Führungskammer 213 hin. Der Anstellwinkel der Schubfläche 237 zur Verschieberichtung des Druckstücks 231 ist zweckmäßigerweise zur Erhöhung der Andruckkraft kleiner als 45° gewählt.

Zur Entriegelung des Einsatzelements 211 ist an dem nicht näher dargestellten Geräterahmen ein Betätigungsfinger 239 in Verschieberichtung des Druckstücks 231 verschiebbar geführt. Der Betätigungsfinger 239, der sich bei Drehbetrieb des Rotors 215 außerhalb dessen Drehwegs befindet, greift bei in einer Einsatzelement-Wechselposition stillstehendem Rotor 215 durch eine Riegelöffnung 241 in den Rotor 215 ein und verrastet diesen drehfest. Das dem Druckstück 231 zugewandte Ende des Betätigungsfingers 239 trägt eine Nase 243, die durch die Öffnung 233 des Positionierelements 219 hindurchgreift und an einer entgegengerichteten Schulter 245 des Druckstücks 231 anschlagen kann. Im Verlauf der Einschubbewegung des Betätigungsfingers 239 hebt die Nase 243 die Schubfläche 237 des Druckstücks 231 von dem Stift 235 des Positionierelements 219 ab. Der Betätigungsfinger 239 trägt anschließend an die Nase 243 eine der Schubfläche 237 entgegengerichtete Schubfläche 247. Die Schubfläche 247 verläuft parallel zu dem Stift 235 und schräg zu den Verschieberichtungen des Betätigungsfingers 239 und des Positionierelements 219. Die Nase 243 ist so bemessen, daß der Betätigungsfinger 239 das Druckstück 231 vom Stift 235 abhebt und damit von der Druckkraft der Feder 227 entlastet, bevor die Schubfläche 247 an dem Stift 235 anschlägt und das Positionierelement 219 aus dem Einschubweg der Führungs-

Spritzgußverfahren hergestellten Grundkörper 261, in den
von einer seiner Seitenflächen her in nicht näher dargestellter Weise sämtliche für die Meßreaktionen erforderlichen Kanäle und Kammern eingeformt sind. Die Kanäle und
Kammern sind durch eine, beispielsweise im Ultraschall-
Schweißverfahren dicht befestigte, streifenförmige Platte
263    verschlossen. Die Platte 263 hat eine ebene
Oberfläche und trägt eine anhand der Fig. 6 und 7 näher
erläuterte magnetische Datenträgerschicht 265. Die der
Platte 265 gegenüberliegende Seitenfläche folgt, wie dies
bei 267 für eine optische Meßkammer 269 durch eine gestrichelte Linie angedeutet ist, der Form der Kammern und
Kanäle. An den Schmalseitenflächen sind der Platte 263 gegenüberliegend Wangen 271 angeformt, die entlang der Längskanten
des Einsatzelements Führungsflächen bilden, die das Einsatzelement in der Führungskammer führen.


Das Einsatzelement trägt, bezogen auf seine Rotorposition,
radial außerhalb der optischen Meßkammer 269 eine parallelachsig zur Drehachse des Rotors verlaufende Positioniermulde 273, in die das bei 275 angedeutete, ebenfalls achsparallele Positionierorgan der rotorseitigen Halterung
eingreifen kann. Die Positioniermulde (273) öffnet sich
zur Seite des Einsatzelements hin, also quer zur Längserstreckung des Einsatzelements. Sie ist näherungsweise
halbkreisförmig ausgebildet. Die Positioniermulde 273
und die ihr eng benachbart in den Grundteil 261 eingeformte Mulde der optischen Meßkammer 269 sind so
geformt, daß sie von einem einstückigem Formwerkzeug hergestellt werden, welches für den Entformvorgang nicht geteilt
zu werden braucht. Auf diese Weise lassen sich die Herstellungstoleranzen der Positioniermulde 273 relativ zur
optischen Meßkammer 269 verringern.

Die Positioniermulde 273 hat eine senkrecht zur Längsrichtung des Einsatzelements verlaufende Anlagefläch 277 welche die radiale Position des Einsatzelements relativ zum optischen Strahlengang des Photometers bestimmt und eine in Längsrichtung verlaufende Fläche 279, die die Position in Umfangsrichtung des Rotors festlegt. Eine zur Anlagefläche 277 schräg verlaufende, zur Drehachse des Rotors jedoch parallele Fläche 281 nähert das Positionierorgan 275 der Anlagefläche 277 an, wobei sich die Anlagefläche 277 während des Zentrifugierbetriebs vollständig anlegt. Die Anlagefläche 279 wird in der Ausführungsform nach Fig. 1 mittels des Hebels 63 an den rotorfesten Stift 57 gedrückt. In der Ausführungsform nach Fig. 11 wird eine der Anlagefläche 279 entsprechende Fläche durch die Führungsflächen der Wangen 271 gebildet, die an der Seitenwand 225 anliegen. Die Positioniermulde 273 kann aber auch - gesehen in Richtung der Rotorachse- Rechteckquerschnitt haben.

Die Anlageflächen der Positioniermulde können auch in anderer Weise so gestaltet werden, daß sie eine reproduzierbare und exakte Positionierung des Einsatzelements gewährleisten. Wesentlich ist dabei, daß die Anlageflächen und das bevorzugt als Stift ausgebildete rotorfeste Positionierorgan 275 sich nicht großflächig berühren, wie dies beispielsweise der Fall wäre, wenn die Positioniermulde 273 exakt halbkreisförmig mit an den Stift 275 angepaßtem Radius ausgebildet wäre. In diesem Fall könnten schon geringe Toleranzänderungen in der Ausbildung der Positioniermulde 273 entweder dazu führen, daß die Positioniermulde 273 auf dem Stift 275 klemmt oder zuviel Spiel hat und damit keine exakte und vor allem reproduzierbare Positionierungen möglich ist. Im Gegensatz dazu ist bei einer Konstruktion, bei der die Positioniermulde 273 nur mit zwei oder drei schmalen, nahezu linienförmigen Flächen an dem Stift 275 anliegt, eine reproduzierbare Positionierung auch bei den unvermeidbaren Toleranzen der Herstellung der Positioniermulde jederzeit gewährleistet.

BOEHRINGER MANNHEIM GMBH                    2543

<u>Patentansprüche</u>

1. Analysegerät zur photometrischen Bestimmung eines Parameters einer Flüssigkeit, insbesondere Zentrifugal-Analysegerät, mit einem um eine zentrische Drehachse (5) drehbar an einem Geräterahmen (1) gelagerten, und von einem Motor (3) rotierend antreibbaren Rotor (7; 215), mit mehreren, an dem Rotor (7) vorgesehenen Halterungen (9; 213) für betriebsmäßig abnehmbare, langgestreckte und mit ihrer Längsrichtung im wesentlichen radial zur Drehachse des Rotors (7; 215) anzuordnende Einsatzelemente (11; 211), von denen jedes zumindest eine optische Meßkammer (15; 269) für die Flüssigkeit enthält, mit zueinander komplementären Positionierorganen (57, 59; 219, 223, 225) an den Halterungen (9; 213) und den Einsatzelementen (11; 211), deren gegeneinander gerichtete Anlageflächen die Einsatzelemente (11; 211) sowohl radial als auch in Umfangsrichtung des Rotors (7; 215) positionieren, wobei zumindest ein Teil der die Einsatzelemente (11; 211) in Umfangsrichtung positionierenden Anlageflächen der Positionierorgane (57;
219, 225) der Halterungen (9; 213) rotorfest ausgebildet sind und mit einem photometrischen Meßgerät (17,
93, 95), dessen optischer Strahlengang (17) den Drehweg
der Meßkammern (15; 269) der am Rotor (7; 215) gehaltenen
Einsatzelemente schneidet, dadurch  g e k e n n -
z e i c h n e t , daß die Halterungen (9; 213) als
radial zur Drehachse des Rotors (7; 215) nach außen
offene Führungskammern ausgebildet sind, in die die Einsatzelemente (11; 211) im wesentlichen radial zur Drehachse (5) einschiebbar sind, daß die Positionierorgane
(57; 219, 225) der Halterungen (9; 213) jeweils in Umfangsrichtung des Rotors (7; 215) seitlich des Einschiebewegs des Einsatzelements (11; 211) angeordnet
sind, daß die in die Führungskammern (9; 213) eingeschobenen Einsatzelemente (11) und/oder ein an dem Rotor (215)
beweglich geführtes Positionierelement (219) jeder Halterung
(9; 213) in Umfangsrichtung des Rotors (7; 215) relativ
zu dem rotorfesten Teil                        des Positionierorgans (57; 219, 225) der Halterung verschiebbar sind, und daß den Halterungen (9; 213) Stellorgane
(63; 227) zugeordnet sind, die die in die Führungskammern eingeschobenen Einsatzelemente (11; 211) und/oder
die beweglich geführten Positionierelemente (219) in
eine Eingriffsposition der Positionierorgane (57, 59;
219, 223, 225), in der die Einsatzelemente (11; 211) an
dem rotorfesten Teil                        der Positionierorgane (57;       225) der Halterungen (9; 213)
anliegen, verschieben und in der Eingriffsposition halten.

2. Analysegerät nach Anspruch 1, dadurch gekennzeichnet, daß an dem Geräterahmen (1) ein Riegel (77) beweglich geführt ist, der Führungsflächen aufweist, die die Führungskammern (9) des Rotors (7) relativ zu einer gleichbleibenden Einsteckelement-Wechselposition des Geräterahmens (1) ausrichten und verrasten.

3. Analysegerät nach Anspruch 2, dadurch g e k e n n - z e i c h n e t , daß ein mit dem Riegel (77) zusammenwirkender Auswerfer (75) vorgesehen ist, der die Positionierorgane (57, 59; 219, 223, 225) außer Eingriff bringt, wenn der Riegel (77) sich in der die Führungskammern (9; 213) ausrichtenden Position befindet.

4. Analysegerät nach einem der vorhergehenden Ansprüche, dadurch g e k e n n z e i c h n e t , daß die Positionierorgane der Halterungen als parallel zur Drehachse (5) vom Rotor (7) abstehende Stifte (57) und die Positionierorgane der Einsatzelemente (11) als Rastmulden (59) ausgebildet sind.

5. Analysegerät nach Anspruch 4, dadurch g e k e n n - z e i c h n e t , daß der Stift (57) in einer axialen Bohrung einer Basisscheibe (55) des Rotors (7) sitzt und auf der der Halterung axial abgewandten Seite der Basisscheibe (5) einstückig in einen Steuerstift (97) für eine Steuerlichtschranke (99) übergeht.

6. Analysegerät nach einem der vorhergehenden Ansprüche dadurch g e k e n n z e i c h n e t , daß das Stellorgan als am Rotor (7) schwenkbar gelagerter Hebel (63) ausgebildet ist und daß eine Feder (69) und/oder ein bei Drehung des Rotors wirksames Fliehgewicht (67) den Hebel Hebel (63) gegen das Einsatzelement (11) in Richtung auf den rotorfesten Teil des Positionsorgans (57) der Halterung (9) zu mit einer Kraft beaufschlagt.

7. Analysegerät nach Anspruch 6, dadurch g e k e n n - z e i c h n e t , daß der Hebel (63) auf der dem rotorfesten Teil des Positionierorgans (57) der Halterung (9) in Umfangsrichtung des Rotors (7) gegenüberliegenden Seite des Einsteckwegs um eine zur Drehachse (5) parallele Achse (61) schwenkbar gelagert ist.

8. Analysegerät nach einem der Ansprüche 6 oder 7, dadurch g e k e n n z e i c h n e t, daß der Riegel (77) bei in einer Einsatzelement-Wechselposition stillstehendem Rotor (7) in den Schwenkweg des Hebels (63) hineinbewegbar ist, daß der Riegel (77) eine entgegen seiner Einführbewegungsrichtung weisende Anschlagfläche (87) aufweist und daß der Hebel (63) eine Sperrfläche (91) aufweist, die bei in Eingriff sich befindenden Positionierorganen (57, 59) der Halterung und des Einsatzelements (11) und/oder bei fehlendem Einsatzelement (11) aus der Bewegungsbahn des Riegels (77) geschwenkt ist und bei außer Eingriff sich befindenden Positionierorganen (57, 59) eines in die Führungskammer (9) eingeschobenen Einsatzelements (11) und der Halterung in den Weg der Anschlagfläche (87) des Riegels (77) ragt und die Ausziehbewegung des Riegels (77) sperrt.

9. Analysegerät nach einem der Ansprüche 6-8, dadurch g e - k e n n z e i c h n e t, daß der Riegel (77) etwa radial zum Rotor (7) verschiebbar geführt ist und an seinem der Drehachse (5) des Rotors (7) zugewandten, freien Ende eine Schubfläche (83) trägt, die auf der in Umfangsrichtung des Rotors (7) dem Einsatzelement (11) abgewandten Seite des Hebels (63) mit einer Schubfläche (85) eines Arms (67) des Hebels (63) zusammenwirkt.

- 6 -   0132510

13. Analysegerät nach Anspruch 12, dadurch g e k e n n -
z e i c h n e t , daß die Transporteinrichtung (19)
eine im wesentlichen radial zur Drehachse (5) des Rotors (7) verlaufende Schlittenführung (31) aufweist,
längs der ein Schlitten (29) zwischen einer Position
im Bereich des Rotors (7) und einer Position im Bereich des Magazins (21) verschiebbar ist und daß an dem
Schlitten (29) ein mittels eines steuerbaren Antriebs
(39, 41) in den Einschiebeweg der Einsatzelemente (11)
hinein und heraus bewegbarer Greifer (27) beweglich
geführt ist.

14. Analysegerät nach Anspruch 13 , dadurch g e k e n n -
z e i c h n e t , daß die Aufnahmen (23) des Magazins
(21) und die Führungskammern (9) des Rotors (7) zusammen mit längs der Schlittenführung (31) sich erstreckenden Führungsflächen einen im wesentlichen durchgehenden,
geradlinigen und die Einsatzelemente (11) von unten
stützend tragenden Führungskanal (25) für die Einsatzelemente (11) bilden, längs dem die Einsatzelemente
(11) mittels des Greifers (27) verschiebbar sind.

15. Analysegerät nach Anspruch 14, dadurch g e k e n n -
z e i c h n e t , daß die Transporteinrichtung (19)
eine an dem Geräterahmen (1) um eine zu der Schlittenführung (31) parallele Achse drehbar gelagerte Nockenstange
(41) aufweist, entlang der der Greifer (27) bei Verschiebung des Schlittens (29) gleitet und die in einer
ersten Drehstellung den Greifer (27) in Eingriff mit
dem Einsatzelement (11) bringt und in einer zweiten
Drehstellung außer Eingriff bringt.

- 7 -

0132510

16. Analysegerät nach einem der vorhergehenden Ansprüche, dadurch g e k e n n z e i c h n e t , daß die Einsatzelemente (11) an einer ihrer in Verschieberichtung gesehen seitlichen Flächen eine magnetische Datenträgerschicht (101) tragen und daß im Bereich eines die Einsatzelemente (11) dem Magazin (21) und/oder dem Rotor (7) zuführenden Führungskanals (25) ein Magnetkopf (107) zum Lesen und/oder Beschreiben der Datenträgerschicht (101) angeordnet ist.

17. Analysegerät nach Anspruch 16, dadurch g e k e n n z e i c h n e t , daß auf der dem Magnetkopf (107) gegenüberliegenden Seite des Führungskanals (25) ein Führungsteil (121) mit zwei zur Verschieberichtung der Einsatzelemente (11) parallelen, vom Magnetkopf (107) weg aufeinander zu geneigten Führungsflächen (123, 125) zur Kantenführung benachbarter, paralleler Längskanten des Einsatzelements (11) angeordnet ist, daß der Magnetkopf (107) zumindest um eine zur Verschieberichtung der Einsatzelemente (11) etwa parallele Achse schwenkbar gelagert ist und daß der Magnetkopf (107) und/oder das Führungsteil (121) federnd aufeinander zu vorgespannt sind.

18. Analysegerät nach Anspruch 17, dadurch g e k e n n z e i c h n e t , daß der Magnetkopf (107) an wenigstens einer etwa parallel zur Datenträgerschicht (101) verlaufenden Blattfeder (109) gehalten ist.

19. Analysegerät, insbesondere nach einem der vorhergehenden Ansprüche, dadurch g e k e n n z e i c h n e t , daß der die Einsatzelemente (11; 211) aufnehmende Innenraum des Rotors (7; 215) im wesentlichen geschlossen ist und/oder im wesentlichen geschlossene, längs der Einsatzelemente (11; 211) verlaufende, zum Einsatzelement (11;

211) jeweils offene Luftleitkanäle (253) aufweist und über eine zentrische Öffnung (147) des Rotors (7) mit Luft aus einer mittels eines (ersten) Regelkreises (159) temperaturgeregelten Luftquelle (151, 153) beschickbar ist.

20. Analysegerät nach Anspruch 19, dadurch g e k e n n - z e i c h n e t , daß der Rotor (7) in einem im wesentlichen geschlossenen, den Geräterahmen (1) bildenden oder umschließenden Gehäuse (141) angeordnet ist, dessen Luft-Innentemperatur über eine Heizeinrichtung (167) mittels eines zweiten Regelkreises (163) temperaturregelbar ist.

21. Analysegerät nach Anspruch 19 oder 20, dadurch g e - k e n n z e i c h n e t , daß eine die Rotation des Rotors (7) steuernde Steuerung (161) bei Zentrifugalbetrieb den Solltemperaturwert des ersten Regelkreises (159) eine vorbestimmte Zeitdauer vor Beginn des Zentrifugalbetriebs um einen vorbestimmten Temperaturwert ändert, insbesonders absenkt.

22. Analysegerät nach Anspruch 21, dadurch g e k e n n - z e i c h n e t, daß die Temperaturänderung und/oder die Rückführung der Temperatur auf den Normalwert stufenweise erfolgt.

23. Analysegerät nach Anspruch 19, dadurch g e k e n n - z e i c h n e t , daß in einer der Führungskammern (9) des Rotors (7) bleibend eine Temperaturfühleinrichtung (175) in einem der Einsatzelementform entsprechenden Gehäuse angeordnet ist.

24. Analysegerät nach Anspruch 23, dadurch g e k e n n - z e i c h n e t, daß die bleibende Temperaturfühlein- richtung (175) zur Messung der Ist-Temperatur des ersten Regelkreises (159) verwendet wird.

25. Analysegerät nach einem der Ansprüche 19 bis 24, da- durch g e k e n n z e i c h n e t , daß die zur Aufnahme der Einsatzelemente (11) vorgesehenen radialen Führungs- kammern (9) entlang der Einsatzelemente (11) sich erstreckende Luftleitkanäle für die der zentrischen Öff- nung zugeführte Luft bilden, welche die Einsatzelemente (11) im wesentlichen vollständig umschließen.

26. Analysegerät nach einem der Ansprüche 19 bis 25, dadurch g e k e n n z e i c h n e t , daß die Führungs- kammern (9) durch am Rotor (7) und/oder in geringem Abstand vom Rotor (7) zu dessen Außenflächen parallel angeordnete, am Geräterahmen (1) gehaltene Wände (143, 145) im wesentlichen geschlossen sind.

27. Analysegerät, insbesondere nach einem der vorher- gehenden Ansprüche, dadurch g e k e n n z e i c h - n e t , daß der Belade- und/oder Entladebetrieb des Rotors (7) durch eine Steuerung steuerbar ist, die nach Beschicken bzw. Entladen einer vorbestimmten Anzahl benachbarter Halterungen des Rotors (7) mit Einsatzelementen die diesen zuletzt beschickten Halterungen im wesentlichen diametral gegenüberliegende vorbestimmte Anzahl benachbarter Halterung beschickt bzw. entlädt.

28. Analysegerät nach Anspruch 27, dadurch g e k e n n - z e i c h n e t , daß die Steuerung die Halterungen des Rotors (7) in gleichbleibendem Beschickungsdrehsinn fortschreitend belädt oder entlädt und abwechselnd entweder die der zuletzt beladenen oder entladenen Anzahl an Halterungen etwa diametral gegenüberliegende vorbestimmte Anzahl an Halterungen oder die der zuletzt beladenen oder entladenen Anzahl an Halterungen benachbarte vorbestimmte Anzahl an Halterungen belädt bzw. entlädt.

29. Analysegerät, insbesondere nach einem der vorhergehen- den Ansprüche, dadurch g e k e n n z e i c h n e t , daß der Rotor (201) für jede Halterung (203) ein radial zwischen einer inneren und einer äußeren Position bewegliches Fliehgewicht (207) trägt, und daß das in die Halterung (203) eingesetzte Einsatzelement (205) das Fliehgewicht (207) seiner Halterung (203) in der inneren Position verrastet.

30. Analysegerät nach Anspruch 1, dadurch g e k e n n - z e i c h n e t , daß die Positioniereinrichtung jeder Halterung (213) eine sich in einer rotorfesten Kammer (229) abstützende Feder (227) aufweist, die über eine schräge Schubfläche (237) eines Druckstückes (231) das im Umfangsrichtung des Rotors (215) bewegliche Positionierelement (219) auf eine rotorfeste Anlagefläche (225) der Halterung (213) zu mit einer Kraft beaufschlagt.

31. Einsatzelement insbesondere zur Verwendung bei einem Analyseae- rät gemäß einem der vorangegangenen Ansprüche, da- durch g e k e n n z e i c h n e t , daß die opti- sche Meßkammer (269) bei in die Führungskammer eingestecktem Einsatzelement im Bereich des radial
äußeren Endes des Einsatzelements vorgesehen ist
und daß das Positionierorgan (273) zwischen diesem
radial äußeren Ende des Einsatzelements und der Meßkammer (269) angeordnet ist.

32. Einsatzelement nach Anspruch 31, dadurch g e k e n n -
z e i c h n e t, daß das Positionierorgan als bei
in die Führungskammer (9, 213) eingestecktem Einsatzelement (11, 211)seitlich öffnende Positioniermulde
(269)ausgebildet ist, welche Anlageflächen (277, 279, 281)
aufweist, die im Zusammenwirken mit den rotorfesten
Positionierorganen (57, 219) eine reproduzierbare Lage
des Einsatzelements (11, 211) definieren

33. Einsatzelement nach Anspruch 31 oder 32, dadurch g e -
k e n n z e i c h n e t, daß das Einsatzelement als Kunststoff-Formteil ausgebildet ist und daß zumindest die das Einsatzelement in radialer Richtung
positionierenden Anlageflächen (277) des Einsatzelements so gelegen sind, daß sie zusammen mit der
Meßkammer mittels eines gemeinsamen, einstückig
entformbaren Formwerkzeugs herstellbar sind.

34. Einsatzelement nach einem der Ansprüche 31 bis 33,
dadurch g e k e n n z e i c h n e t, daß das
Positionierorgang (273) des Einsatzelements der
optischen Meßkammer (269) eng benachbart ist.

FIG. 1

## FIG. 2

## FIG. 7

## FIG. 6

FIG. 3

FIG. 4

FIG. 5

0132510

FIG. 8

FIG. 9

FIG. 10

**FIG. 11**

**FIG. 12**

**FIG. 13**